# EUROPEAN PATENT APPLICATION

(11) **EP 4 169 782 A1**
(43) Date of publication of application: **26.04.2023**
(21) Application number: 20944608.7
(22) Date of filing: 10.07.2020
(51) Int. Cl.: B60T 13/66

(54) **BRAKING SYSTEM FOR VEHICLE BRAKING, AND AUTONOMOUS VEHICLE**

(71) Applicant: Huawei Technologies Co., Ltd., Longgang District, Shenzhen, Guangdong 518129 (CN)
(72) Inventor: ZHANG, Yongsheng, Shenzhen, Guangdong 518129 (CN); YANG, Weimiao, Shenzhen, Guangdong 518129 (CN); LIU, Donghao, Shenzhen, Guangdong 518129 (CN)
(74) Representative: Isarpatent
(86) International application number: PCT/CN2020/101307
(87) International publication number: WO 2022/006843

(57) **Abstract**

A brake system for vehicle braking is provided, and relates to the field of autonomous driving technologies. The system includes: at least one brake wheel cylinder (26, 27, 28, and 29); a primary brake module (40), configured to provide brake pressure to brake a vehicle; and a secondary brake module (39), including an electric linear pump (31), a first pipe, and a second pipe. The electric linear pump (31) includes a piston (312) and a pump chamber (311). The pump chamber (311) is connected to a liquid storage tank (10) through the second pipe. When the piston (312) moves away from a first interface, the pump chamber (311) receives brake fluid from the liquid storage tank (10) through the second pipe. The first interface is an interface between the pump chamber (311) and the first pipe. The pump chamber (311) is connected to the at least one brake wheel cylinder (26, 27, 28, and 29) through the first pipe. The piston (312) may move toward the first interface and enable brake fluid in the pump chamber (311) to enter the first pipe, to provide brake pressure. The system can provide long-term, high-precision redundant braking.

## Description

### TECHNICAL FIELD

This application relates to the field of autonomous driving, and in particular, to a brake system for vehicle braking and an autonomous vehicle.

### BACKGROUND

With development of autonomous driving technology, it is difficult for current brake systems to adapt to control and safety requirements of autonomous vehicles. To adapt to the development of the autonomous driving technology, it is necessary to consider how to take both brake-by-wire and redundancy backup into account.

In addition, it is also necessary to consider how to enable a brake system of a vehicle to support an antilock braking system (antilock braking system, ABS), an autonomous emergency braking (autonomous emergency braking, AEB), a traction control system (traction control system, TCS), and an electronic stability system (electronic stability program, ESP) to improve safety and comfort of the vehicle during driving or braking. Therefore, higher requirements are put forward for the brake system of the vehicle, especially for a redundant brake module.

Redundant brake modules of existing vehicle brake systems have poor control accuracy, do not respond quickly enough, and do not maintain redundant braking long enough. Therefore, safety and comfort in the driving process of the vehicle are limited.

### SUMMARY

Embodiments of this application provide a brake system for vehicle braking and an autonomous vehicle. The brake system may perform long-time and high-precision redundant braking on a vehicle.

According to a first aspect, an embodiment of this application provides a brake system for vehicle braking, including at least one brake wheel cylinder, a primary brake module, and a secondary brake module. The secondary brake module may provide brake pressure, to implement redundant braking (or auxiliary braking) on a vehicle. Specifically, the secondary brake module includes an electric linear pump, a first pipe, and a second pipe. The electric linear pump includes a piston and a pump chamber. The pump chamber is connected to a liquid storage tank through the second pipe. When the piston moves away from a first interface, the pump chamber receives brake fluid from the liquid storage tank through the second pipe. The first interface is an interface between the pump chamber and the first pipe. The pump chamber is connected to the at least one brake wheel cylinder through the first pipe. The piston may move toward the first interface and enable brake fluid in the pump chamber to enter the first pipe to provide brake pressure. A movement of the piston is linear.

In this solution of this embodiment of this application, the pump chamber of the electric linear pump of the secondary brake module may contain brake fluid, and the piston of the electric linear pump may move linearly, to reduce or increase space in the pump chamber for containing the brake fluid, and squeeze the brake fluid toward the brake wheel cylinder, so as to provide brake pressure. Therefore, by controlling a linear movement of the piston, a size of the space in the pump chamber for containing the brake fluid can be continuously adjusted, so that the brake pressure provided by the brake system can change linearly, to implement continuous and fine control (regulation) on the brake pressure. In addition, because the linear pump may continuously squeeze the brake fluid statically by using the piston based on a motor, the brake system provided in this embodiment of this application can maintain the brake pressure for a long time, to perform high-precision and long-time redundant braking on the vehicle.

In a possible implementation, the second pipe is connected to the pump chamber through a second interface, and a distance between the second interface and the first interface is less than a first threshold. The second pipe has a one-way valve, to enable the brake fluid to flow from the liquid storage tank to the pump chamber, and prevent the brake fluid from flowing from the pump chamber to the liquid storage tank.

In other words, in this implementation, a one-way valve is disposed between the pump chamber and the liquid storage tank to implement one-way flowing of the brake fluid from the liquid storage tank to the pump chamber. Therefore, the second interface may be disposed at a position close to the first interface, so that only a small back-off of the piston (away from the first interface) can enable the brake fluid to flow into the pump chamber. In addition, there is little idle stroke of the piston as the piston advances (close to the first interface to provide brake pressure).

In a possible implementation, the second pipe is connected to the pump chamber through a third interface, and a distance between the third interface and the first interface is greater than a second threshold.

In other words, in this implementation, the third interface may be disposed at a position far away from the first interface. When the piston advances to the third interface, the third interface may be blocked, to prevent the brake fluid in the pump chamber from flowing to the liquid storage tank through the third interface. When the piston further advances, the space in the pump chamber for containing the brake fluid may be further reduced, to generate brake pressure.

In a possible implementation, the secondary brake module further includes a first electromagnetic valve disposed on the first pipe. When the piston moves toward the first interface, the first electromagnetic valve is in an open state, to transmit brake pressure to the at least one brake wheel cylinder; and when the piston moves away from the first interface, the first electromagnetic valve is in a closed state, to prevent backflow of brake fluid from the at least one brake wheel cylinder to the pump chamber.

In other words, in this implementation, an electromagnetic valve is disposed on the pipe between the secondary brake module and the brake wheel cylinder. By controlling the opening or closing of the electromagnetic valve, the brake pressure can be transmitted to the brake wheel cylinder when the secondary brake module provides the brake pressure, and the brake fluid in the brake wheel cylinder may be prevented from flowing back to the pump chamber when the secondary brake module aspirates the brake fluid (the piston moves away from the first interface, the pressure in the pump chamber decreases, and the brake fluid may flow from the liquid storage tank to the pump chamber).

In a possible implementation, the at least one brake wheel cylinder includes at least two brake wheel cylinders. The first pipe includes two branches. The two branches are separately connected to different brake wheel cylinders of the at least two brake wheel cylinders. The first electromagnetic valve includes two electromagnetic valves, and the two electromagnetic valves are separately disposed on different branches of the two branches.

In other words, in this implementation, at least two brake circuits may be provided. Each of the at least two brake circuits may be independently controlled or jointly controlled, to implement flexible braking on each wheel of the vehicle and meet various brake requirements of the vehicle.

In a possible implementation, the brake system further includes a controller. The secondary brake module further includes a pressure sensor disposed on the first pipe, and the pressure sensor is located between the first electromagnetic valve and the first interface. When the first electromagnetic valve is in the open state, the pressure sensor is configured to detect pressure in the first pipe, and the controller is configured to calculate hydraulic pressure in the at least one brake wheel cylinder based on the pressure detected by the pressure sensor.

In other words, in this implementation, the secondary brake module may further include a pressure sensor. A pressure signal detected by the pressure sensor may be used by the controller to calculate the hydraulic pressure in the brake wheel cylinder, to control the secondary brake module to provide the corresponding brake pressure.

In a possible implementation, the secondary brake module further includes a third pipe, where one end of the third pipe is connected to the first pipe, and the other end of the third pipe is connected to the primary brake cylinder. A second electromagnetic valve is disposed on the third pipe. When brake is performed manually, the second electromagnetic valve is in an open state, to enable brake pressure provided by the secondary brake module to be transmitted to the at least one primary brake cylinder through the third pipe and the first pipe; and when the secondary brake module provides brake pressure, the second electromagnetic valve is in a closed state, to prevent the brake pressure in the first pipe from being transmitted to the primary brake cylinder.

In other words, in this implementation, the brake system provided in this embodiment of this application may be operated manually. In other words, the brake system provided in this embodiment of this application may be compatible with manual braking.

In a possible implementation, the primary brake module includes an electric linear pump, a fourth pipe on which a third electromagnetic valve is disposed, and a fifth pipe on which a fourth electromagnetic valve is disposed. The electric linear pump of the primary brake module is used to provide brake pressure. One end of the fourth pipe is connected to the first pipe, and the other end of the fourth pipe is connected to the at least one brake wheel cylinder. One end of the fifth pipe is connected to the fourth pipe, and the other end of the fifth pipe is connected to the electric linear pump of the primary brake module. A position at which the fifth pipe and the fourth pipe are connected is located between the third electromagnetic valve and the at least one brake wheel cylinder.

In other words, in this implementation, an electromagnetic valve may be disposed between the electric linear pump of the secondary brake module and the electric linear pump of the primary brake module, and an electromagnetic valve may be disposed between the electric linear pump of the primary brake module and the brake wheel cylinder. By controlling these electromagnetic valves, different brake modes can be implemented.

In a possible implementation, when the brake system is in a mode in which the primary brake module independently performs braking, the third electromagnetic valve is in a closed state, to prevent the brake pressure provided by the electric linear pump of the primary brake module from being transmitted to the secondary brake module; and the fourth electromagnetic valve is in an open state, to enable the brake pressure provided by the electric linear pump of the primary brake module to be transmitted to the at least one brake wheel cylinder.

In other words, in this implementation, when the primary brake module independently provides brake pressure, the electromagnetic valve between the electric linear pump of the secondary brake module and the electric linear pump of the primary brake module may be closed, to prevent the brake pressure provided by the electric linear pump of the primary brake module from being transmitted to the secondary brake module; and the electromagnetic valve between the electric linear pump of the primary brake module and the brake wheel cylinder may be opened, to enable the brake pressure provided by the electric linear pump of the primary brake module to be transmitted to the brake wheel cylinder.

In a possible implementation, when the brake system is in a mode in which the secondary brake module independently performs braking, the third electromagnetic valve is in an open state, to enable the brake pressure provided by the secondary brake module to be transmitted to the at least one brake wheel cylinder; and the fourth electromagnetic valve is in a closed state, to prevent the brake pressure provided by the secondary brake module from being transmitted to the electric linear pump of the primary brake module.

In a possible implementation, when the brake system is in a mode in which the primary brake module and the secondary brake module cooperate in braking, the third electromagnetic valve and the fourth electromagnetic valve each are in an open state, to enable the brake pressure provided by the secondary brake module and the brake pressure provided by the electric linear pump of the primary brake module to be transmitted to the at least one brake wheel cylinder.

In a possible implementation, the first pipe is divided into at least one branch at the at least one brake wheel cylinder. The at least one branch is in a one-to-one correspondence with the at least one brake wheel cylinder. An isolation valve is disposed on each of the at least one branch, to independently brake each of the at least one brake wheel cylinder.

In other words, in this implementation, an independent isolation valve may be disposed for each brake wheel cylinder, to independently brake each brake wheel cylinder, thereby meeting different brake requirements of the vehicle.

In a possible implementation, that the piston may move toward the first interface and enable brake fluid in the pump chamber to enter the first pipe is specifically as follows: When the primary brake module fails or the provided brake pressure is insufficient, the piston may move toward the first interface and enable the brake fluid in the pump chamber to enter the first pipe.

In other words, in this implementation, the secondary brake module in the brake system provided in this embodiment of this application may provide brake pressure when the primary brake module fails (cannot provide brake pressure) or the provided brake pressure is insufficient, to ensure safety in a driving process of the vehicle.

According to a second aspect, an embodiment of this application provides an autonomous vehicle, and the vehicle includes the brake system provided in the first aspect.

The brake system provided in this embodiment of this application includes a secondary brake module. A pump chamber of an electric linear pump of the secondary brake module may contain brake fluid. A piston of the electric linear pump may move linearly to reduce space in the pump chamber for containing the brake fluid and squeeze the brake fluid to a brake wheel cylinder, so as to provide brake pressure. Therefore, by controlling a linear movement of the piston, a size of the space in the pump chamber for containing the brake fluid can be continuously adjusted, so that the brake pressure provided by the brake system can change linearly, to realize continuous and fine control (regulation) on the brake pressure. In addition, because the linear pump may continuously squeeze the brake fluid statically by using the piston based on a motor, the brake system provided in this embodiment of this application may maintain the brake pressure for a long time, to perform high-precision and long-time redundant braking on the vehicle.

### BRIEF DESCRIPTION OF DRAWINGS

FIG. 1 is a schematic diagram of a structure of a brake system according to an embodiment of this application;
FIG. 2 is a schematic diagram of a structure of another brake system according to an embodiment of this application;
FIG. 3 is a schematic diagram of a working principle of a manual braking mode of the brake system shown in FIG. 1;
FIG. 4 is a schematic diagram of a working principle of the brake system shown in FIG. 1 in a mode in which a primary brake module independently performs braking;
FIG. 5 is a schematic diagram of a working principle of the brake system shown in FIG. 1 in a mode in which a primary brake module and a secondary brake module cooperate in braking;
FIG. 6 is a schematic diagram of a working principle of the brake system shown in FIG. 1 in a mode in which a secondary brake module independently performs braking;
FIG. 7 is a schematic diagram of a working principle of a secondary brake module independent brake mode of the brake system shown in FIG. 1; and
FIG. 8 is a schematic diagram of a braking effect of a secondary brake module of the brake system shown in FIG. 1.

### DESCRIPTION OF EMBODIMENTS

The following describes technical solutions in embodiments of the present invention with reference to accompanying drawings. It is clear that the described embodiments are merely some but not all of embodiments of this application.

In descriptions of this application, locations or location relationships indicated by terms "center", "up", "down", "in front of", "behind", "left", "right", "vertical", "horizontal", "top", "bottom", "inside", "outside", and the like are based on locations or location relationships shown in the accompanying drawings, and are merely intended for ease of describing this application and simplifying descriptions, instead of indicating or implying that a mentioned apparatus or component needs to be provided on a specific location or constructed and operated on a specific location, and therefore shall not be understood as limitations on this application.

In the descriptions of this application, it should be noted that, unless otherwise clearly specified and limited, terms "mount", "link", and "connect" should be understood in a broad sense, for example, may mean a fixed connection, may be a detachable connection, or may be a butt joint connection or an integrated connection. Persons of ordinary skill in the art can understand specific meanings of the foregoing terms in this application based on specific cases.

In the descriptions of this application, the described specific features, structures, materials, or features may be combined in a proper manner in any one or more of embodiments or examples.

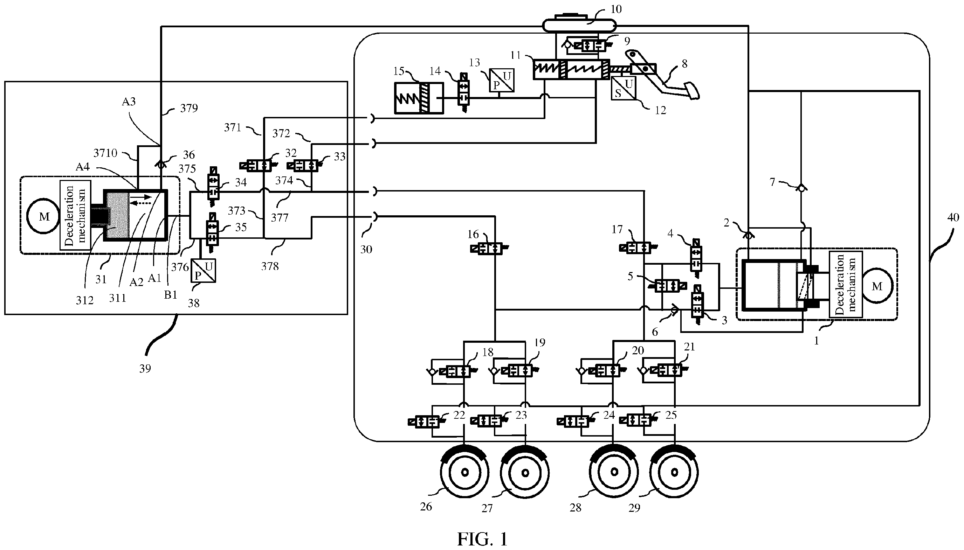

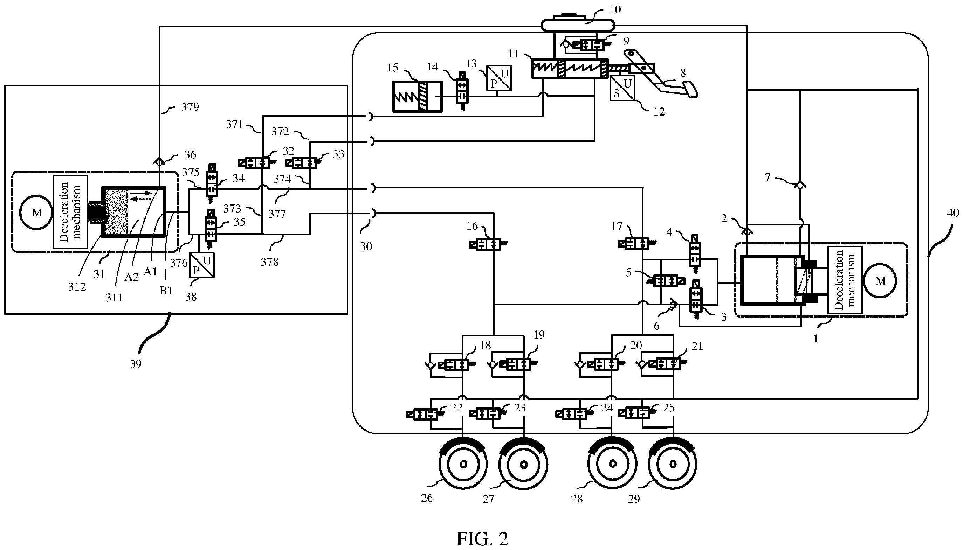

Embodiments of this application provide a brake system for vehicle braking. As shown in FIG. 1 and FIG. 2, the brake system includes a liquid storage tank 10 and at least one brake wheel cylinder (for example, a brake wheel cylinder 26, a brake wheel cylinder 27, a brake wheel cylinder 28, a brake wheel cylinder 29), a primary brake module 40, and a secondary brake module 39. The liquid storage tank 10 may store brake fluid. The primary brake module 40 and the secondary brake module 39 may be controlled by a controller (not shown) to provide brake pressure to enable the brake fluid to enter the brake wheel cylinder and maintain pressure in the brake wheel cylinder to implement braking. For example, when the primary brake module 40 fails, the secondary brake module 39 may independently provide brake pressure, to implement vehicle braking. For example, when the brake pressure provided by the primary brake module 40 is insufficient (for example, hydraulic pressure in the brake wheel cylinder does not reach target pressure when the primary brake module works independently), the secondary brake module 39 may alternatively provide additional brake pressure to implement reliable vehicle braking.

It should be understood that the target pressure may be obtained through calculation by the controller based on a signal from a sensor (for example, a speed of the vehicle, a distance between a specific obstacle and the vehicle, or the like).

For example, the controller may be an electronic control unit.

For example, the controller may include a plurality of sub-controllers, and different controllers in the plurality of sub-controllers may be separately used to control the primary brake module 40 and the secondary brake module 39. Controllers in the plurality of sub-controllers may communicate with each other, to work collaboratively.

The controller may receive detected signals from various sensors on the vehicle, such as detected signals of an external environment of the vehicle, an input from a driver, and status of the brake system (for example, hydraulic pressure in a pipe, and a motor state of the primary brake module 40), and control the brake system based on the detected signals. For example, when determining, based on the detected signal, that the primary brake module fails (for example, a motor of the primary brake module 40 fails), the controller may control the secondary brake module 39 to work, to provide brake pressure.

The brake system provided in embodiments of this application may be applied to an automobile, or may be applied to another vehicle. For example, the vehicle may be a vehicle in a form of a car, a bus, a truck, an agricultural locomotive, a parade float, or a game car in an amusement park.

The following describes, with reference to the accompanying drawings, an example of the brake system for vehicle braking provided in embodiments of this application.

In some embodiments, as shown in FIG. 1 and FIG. 2, the brake system includes the liquid storage tank 10, the primary brake module 40, the secondary brake module 39, and at least one brake wheel cylinder (where the brake wheel cylinder 26, the brake wheel cylinder 27, the brake wheel cylinder 28, and the brake wheel cylinder 29 are shown in the figure).

The secondary brake module 39 may include an electric linear pump 31. The electric linear pump 31 includes a pump chamber 311, a piston 312, and a motor. The pump chamber 311 may contain brake fluid. Based on an action of the motor, the piston 312 may move linearly along a direction of a solid arrow shown in FIG. 1, to squeeze the brake fluid in the pump chamber 311, so as to generate brake pressure.

Specifically, the pump chamber 311 is connected to the brake wheel cylinder (the brake wheel cylinder 26, the brake wheel cylinder 27, the brake wheel cylinder 28 or the brake wheel cylinder 29) through a pipe. The pipe is disposed on an interface A1 of the pump chamber 311 and is opposite to the piston 312. Thus, when the piston 312 moves linearly toward the interface A1 (that is, the piston 312 moves along the direction of the solid arrow shown in FIG. 1), space in the pump chamber 311 for containing the brake fluid is reduced, so that the brake fluid in the pump chamber 311 is squeezed into the pipe through the interface A1, and then the brake fluid flows to the brake wheel cylinder to implement braking. The pipe is described in detail below, and details are not described herein again.

The pump chamber 311 may be connected to the liquid storage tank 10 through a pipe 379, and a one-way valve 36 may be disposed on the pipe 379. The one-way valve 36 enables one-way flowing of the brake fluid between the pump chamber 311 and the liquid storage tank 10, that is, the brake fluid in the liquid storage tank 10 can flow to the pump chamber 311 through the one-way valve 36, but the brake fluid in the pump chamber 311 cannot flow to the liquid storage tank 10 through the one-way valve 36. An interface A2 through which the pipe 379 is connected to the pump chamber 311 is close to the interface A1 (for example, a distance between the interface A1 and the interface A2 may be less than a preset threshold C1), so that when the piston 312 moves linearly away from the interface A1 (that is, the piston 312 moves along a direction of a dashed arrow shown in FIG. 1), the brake fluid in the liquid storage tank 10 can enter the pump chamber 311 as quickly as possible through the interface A2. In other words, when the piston 312 moves from a position close to the interface A1 toward a direction away from the interface A1, a short moving distance may enable the interface A2 to be disengaged from blocking of the piston 312. This enables the brake fluid in the liquid storage tank 10 to enter the pump chamber 311 as quickly as possible through the interface A2.

For example, as shown in FIG. 1, the secondary brake module 39 may further include a pipe 3710. One end of the pipe 3710 is connected to the pipe 379 and the other end of the pipe 3710 is connected to the pump chamber 311. An interface A3 through which the pipe 3710 is connected to the pipe 379 is located between the one-way valve 36 and the liquid storage tank 10. An interface A4 through which the pipe 379 is connected to the pump chamber 311 is located on a side that is of the interface A2 and that is away from the interface A1 (that is, the interface A2 is located between the interface A4 and the interface A1). In other words, the pipe 379 may be divided into two branches at the interface A3. One branch is the pipe 3710, and the one-way valve 36 is disposed on the other branch. Thus, when the piston 312 moves linearly away from the interface A1 (that is, the piston 312 moves along the direction of the dashed arrow shown in FIG. 1), the brake fluid in the liquid storage tank 10 may enter the pump chamber 311 through the two branches, thereby accelerating a speed at which the brake fluid enters the pump chamber 311.

The interface A4 may be disposed at a position away from the interface A1, for example, a distance between the interface A4 and the interface A1 is greater than a preset threshold C2. When the piston 312 moves linearly toward the interface A1 (that is, the piston 312 moves along the direction of the solid arrow shown in FIG. 1), the interface A4 may be blocked as soon as possible, to prevent the brake fluid in the pump chamber 311 from flowing to the liquid storage tank 10 through the interface A3. Then, the piston 312 continues to move toward the interface A1, to further reduce the space in the pump chamber 311 for containing the brake fluid, so as to generate brake pressure. In other words, when the piston 312 moves from an initial position toward the interface A1, the piston may block the interface A4 by moving only a short distance, to prevent the brake fluid in the pump chamber 311 from flowing to the liquid storage tank 10 through the interface A4 as quickly as possible. The initial position refers to a position at which the piston 312 is away from the interface A1 as far as possible in a normal operating state. In other words, the initial position refers to a position that the piston 312 can reach and that is farthest from the interface A1 when the piston 312 is controlled to move away from the interface A1 in a normal working state (a state in which no fault occurs) of the secondary brake module 39.

The following describes pipes between the electric linear pump 31 and the brake wheel cylinder in detail.

As shown in FIG. 1 and FIG. 2, the secondary brake module 39 may include a pipe 375 and a pipe 377. An electromagnetic valve 34 is disposed between the pipe 375 and the pipe 377. In other words, pipes on both sides of the electromagnetic valve 34 are the pipe 375 and the pipe 377 respectively. When the electromagnetic valve 34 is in an open state, the pipe 375 and the pipe 377 are connected. When the electromagnetic valve 34 is in a closed state, the pipe 375 and the pipe 377 are not connected.

An end that is of the pipe 375 and that is away from the electromagnetic valve 34 is connected to a pipe B 1. The pipe B1 is connected to the pump chamber 311 of the electric linear pump 31 at the interface A1. An end that is of the pipe 377 and that is away from the electromagnetic valve 34 may be connected to the primary brake module 40 through a plug-in connector.

The secondary brake module 39 may further include a pipe 376 and a pipe 378. An electromagnetic valve 35 is disposed between the pipe 376 and the pipe 378. In other words, pipes on both sides of the electromagnetic valve 35 are the pipe 376 and the pipe 378 respectively. When the electromagnetic valve 35 is in an open state, the pipe 376 and the pipe 378 are connected. When the electromagnetic valve 35 is in a closed state, the pipe 376 and the pipe 378 are not connected.

An end that is of the pipe 376 and that is away from the electromagnetic valve 35 is connected to the pipe B1. An end that is of the pipe 378 and that is away from the electromagnetic valve 35 may be connected to the primary brake module 40 through a plug-in connector 30.

For example, a pressure sensor 38 is disposed on the pipe 376. When the electric linear pump 31 and the brake wheel cylinder are connected, a pressure signal detected by the pressure sensor 38 is sent to the controller. The controller may determine hydraulic pressure in the brake wheel cylinder based on the pressure signal. For a specific manner in which the controller calculates the hydraulic pressure in the brake wheel cylinder based on the pressure signal, refer to descriptions in the conventional technology, and details are not described herein again.

In an example, the electromagnetic valve 34 and the electromagnetic valve 35 may be two-position two-way electromagnetic valves.

For example, as shown in FIG. 1 and FIG. 2, the secondary brake module 39 may include a pipe 371 and a pipe 373. An isolation valve 32 is disposed between the pipe 371 and the pipe 373. In other words, pipes on both sides of the isolation valve 32 are the pipe 371 and the pipe 373 respectively. When the isolation valve 32 is in an open state, the pipe 371 and the pipe 373 are connected. When the isolation valve 32 is in a closed state, the pipe 371 and the pipe 372 are not connected. An end that is of the pipe 371 and that is away from the isolation valve 32 is a plug-in connector, and the plug-in connector may be connected to the primary brake module 40. An end that is of the pipe 373 and that is away from the isolation valve 32 is connected to the pipe 378.

The secondary brake module 39 may further include a pipe 372 and a pipe 374. An isolation valve 33 is disposed between the pipe 372 and the pipe 374. In other words, pipes on both sides of the isolation valve 33 are the pipe 372 and the pipe 374 respectively. When the isolation valve 33 is in an open state, the pipe 372 and the pipe 374 are connected. When the isolation valve 33 is in a closed state, the pipe 372 and the pipe 374 are not connected. An end that is of the pipe 372 and that is away from the isolation valve 33 is a plug-in connector, and the plug-in connector may be connected to the primary brake module 40. An end that is of the pipe 374 and that is away from the isolation valve 33 is connected to the pipe 377.

In an example, the isolation valve 32 and the isolation valve 33 may be two-position two-way electromagnetic valves.

Thus, the secondary brake module 39 may be connected to the primary brake module 40 through the plug-in connector to achieve redundant braking or auxiliary braking.

The following describes the primary brake module 40.

As shown in FIG. 1 and FIG. 2, the primary brake module includes a wheel cylinder isolation valve 16 and a wheel cylinder isolation valve 17. The wheel cylinder isolation valve 16 and the wheel cylinder isolation valve 17 are disposed on different pipes separately.

In an example, the wheel cylinder isolation valve 16 and the wheel cylinder isolation valve 17 may be two-position two-way electromagnetic valves.

A pipe on which the wheel cylinder isolation valve 16 is located is connected to the brake wheel cylinder 26 and the brake wheel cylinder 27. The pipe on which the wheel cylinder isolation valve 16 is located is divided into two branches at a position close to the brake wheel cylinder. One branch is connected to the brake wheel cylinder 26 and the other branch is connected to the brake wheel cylinder 27. A wheel cylinder liquid inlet valve 18 is disposed on the branch connected to the brake wheel cylinder 26, to independently control hydraulic pressure in the brake wheel cylinder 26. A wheel cylinder liquid inlet valve 19 is disposed on the branch connected to the brake wheel cylinder 27, to independently control hydraulic pressure in the brake wheel cylinder 27.

A pipe on which the wheel cylinder isolation valve 17 is located is connected to the brake wheel cylinder 28 and the brake wheel cylinder 29. The pipe on which the wheel cylinder isolation valve 17 is located is divided into two branches at a position close to the brake wheel cylinder. One branch is connected to the brake wheel cylinder 28 and the other branch is connected to the brake wheel cylinder 29. A wheel cylinder liquid inlet valve 20 is disposed on the branch connected to the brake wheel cylinder 28, to independently control hydraulic pressure in the brake wheel cylinder 28. A wheel cylinder liquid inlet valve 21 is disposed on the branch connected to the brake wheel cylinder 29, to independently control hydraulic pressure in the brake wheel cylinder 29.

For example, as shown in FIG. 1, the brake wheel cylinder 26 may be connected to the liquid storage tank 10 through a pipe, and a wheel cylinder liquid outlet valve 22 is disposed on the pipe. The brake wheel cylinder 27 may be connected to the liquid storage tank 10 through a pipe, and a wheel cylinder liquid outlet valve 23 is disposed on the pipe. The brake wheel cylinder 28 may be connected to the liquid storage tank 10 through a pipe, and a wheel cylinder liquid outlet valve 24 is disposed on the pipe. The brake wheel cylinder 29 may be connected to the liquid storage tank 10 through a pipe, and a wheel cylinder liquid outlet valve 25 is disposed on the pipe.

In an example, the wheel cylinder liquid inlet valve 18, the wheel cylinder liquid inlet valve 19, the wheel cylinder liquid inlet valve 20, the wheel cylinder liquid inlet valve 21, the wheel cylinder liquid outlet valve 22, the wheel cylinder liquid outlet valve 23, the wheel cylinder liquid outlet valve 24, and the wheel cylinder liquid outlet valve 25 may be two-position two-way electromagnetic valves.

A wheel cylinder liquid inlet valve and a wheel cylinder liquid outlet valve corresponding to a brake wheel cylinder (the brake wheel cylinder 26, the brake wheel cylinder 27, the brake wheel cylinder 28, or the brake wheel cylinder 29) may cooperate with each other to regulate hydraulic pressure in the brake wheel cylinder.

Still as shown in FIG. 1 and FIG. 2, the pipe 378 is connected, through the plug-in connector 30, to a port of the pipe on which the wheel cylinder isolation valve 16 is located, and the port is away from the brake wheel cylinder. The pipe 377 is connected, through a plug-in connector, to a port of the pipe on which wheel cylinder isolation valve 17 is located, and the port is away from the brake wheel cylinder.

In this way, the secondary brake module 39 may provide brake pressure to enable the brake fluid to enter the brake wheel cylinder, to implement redundant braking.

As shown in FIG. 1 and FIG. 2, the primary brake module 40 may include a main pressurizing apparatus 1. For example, the main pressurizing apparatus 1 may be specifically an electric linear pump.

The main pressurizing apparatus 1 may be connected to the liquid storage tank 10 through two pipes. A one-way valve 2 is disposed on one of the two pipes, and a one-way valve 7 is disposed on the other pipe. This enables the brake fluid to enter the main pressurizing apparatus 1 through the pipes/pipe on which the one-way valve 2 and/or the one-way valve 7 are/is located. In addition, when the main pressurizing apparatus 1 provides brake pressure to squeeze the brake fluid out from the main pressurizing apparatus 1, the one-way valve 2 may prevent the brake fluid from being squeezed out through the pipe on which the one-way valve 2 is located, and the one-way valve 7 may prevent the brake fluid from being squeezed out through the pipe on which the one-way valve 7 is located.

As shown in FIG. 1, the main pressurizing apparatus 1 may be connected to the pipe on which the wheel cylinder isolation valve 16 is located through a pipe, and a connected interface is located between the wheel cylinder isolation valve 16 and the wheel cylinder liquid inlet valve 18 (or the wheel cylinder liquid inlet valve 19). The main pressurizing apparatus 1 may be connected to the pipe on which the wheel cylinder isolation valve 17 is located through a pipe, and a connected interface is located between the wheel cylinder isolation valve 17 and the wheel cylinder liquid inlet valve 20 (or the wheel cylinder liquid inlet valve 21). Thus, when the main pressurizing apparatus 1 provides brake pressure to squeeze the brake fluid out from the main pressurizing apparatus 1, the brake fluid may enter the brake wheel cylinder through the pipe between the main pressurizing apparatus 1 and the brake wheel cylinder, to implement vehicle braking.

For example, as shown in FIG. 1, a regulating valve 3 and a one-way valve 6 are disposed on the pipe between the main pressurizing apparatus 1 and the pipe on which the wheel cylinder isolation valve 16 is located. An electromagnetic valve 4 is disposed on the pipe between the main pressurizing apparatus 1 and the pipe on which the wheel cylinder isolation valve 17 is located. In addition, a pressure equalizing valve 5 may be disposed between the pipe on which the regulating valve 3 is located and the pipe on which the electromagnetic valve 4 is located. The regulating valve 3, the one-way valve 6, the electromagnetic valve 4, and the pressure equalizing valve 5 assist the main pressurizing apparatus 1 in regulating hydraulic pressure in the pipe more precisely, to implement precise control of vehicle braking. In an example, the electromagnetic valve 4 and the pressure equalizing valve 5 may be two-position two-way electromagnetic valves.

For example, the primary brake module 40 may further include a manual braking component, to implement manual braking. As shown in FIG. 1 and FIG. 2, the manual braking component includes a brake pedal 8, a primary cylinder liquid inlet valve 9, a primary brake cylinder 11, a pedal displacement sensor 12, a pressure sensor 13, an on-off valve 14, and a pedal sense simulator 15. The primary brake cylinder 11 has two pipes. The pipe 371 of the secondary brake module 39 may be connected to one of the two pipes through a plug-in connector, and the pipe 372 may be connected to the other pipe of the two pipes through a plug-in connector. Therefore, the primary brake cylinder 11 may be connected to a brake wheel cylinder through a related pipe of the secondary brake module, to implement manual braking.

The brake system provided in this embodiment of this application may further include one or more pressure sensors, to detect hydraulic pressure in the brake wheel cylinder. For example, a pressure sensor may be disposed on each of the brake wheel cylinder 26, the brake wheel cylinder 27, the brake wheel cylinder 28, and the brake wheel cylinder 29. A pressure sensor can detect hydraulic pressure in a brake wheel cylinder corresponding to the pressure sensor.

In some embodiments, the secondary brake module 39 may be referred to as a redundant brake unit (redundant brake unit, RBU). The primary brake module 40 may be referred to as an integrated brake system (integrated brake system, IBS). The IBS is an electro-hydraulic brake system including an electric linear pump, an electromagnetic valve, a valve body, and the like, and can implement brake functions such as ABS, AEB, TCS, and ESP of a vehicle. The RBU may form a backup independent brake module for the IBS. When a primary brake system of the vehicle fails, the RBU module completes vehicle braking to improve vehicle safety.

With reference to FIG. 1 and FIG. 2, the foregoing describes the structure of the brake system according to embodiments of this application.

The brake system provided in embodiments of this application may have four working modes: a manual braking mode, a mode in the primary brake module independently performs braking, a mode in which the primary brake module and the secondary brake module cooperate in braking, and a mode in which the secondary brake module independently performs braking.

Next, the following describes the foregoing four working modes separately.

### Manual braking mode 1

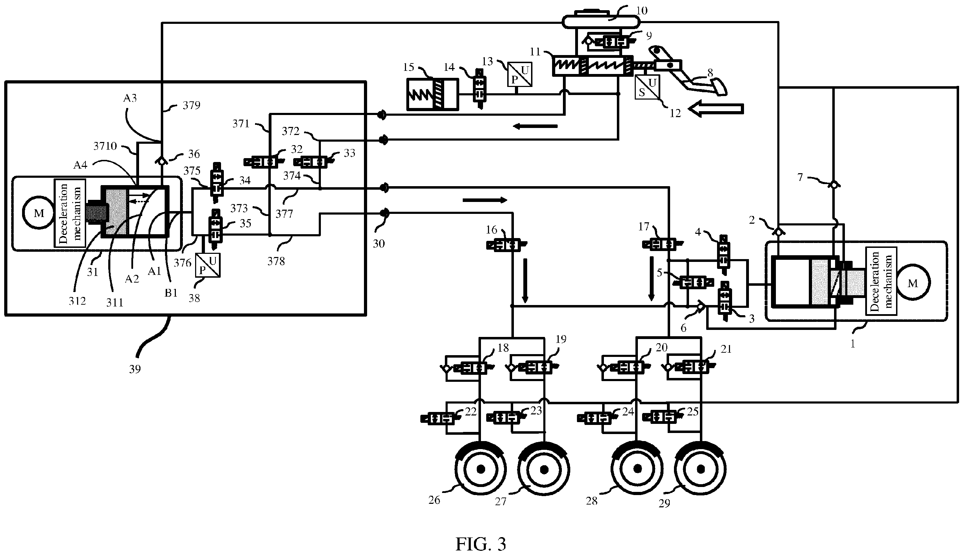

As shown in FIG. 3, when the controller receives a manual braking signal detected by the pedal displacement sensor 12 (for example, a signal generated when the driver steps on the pedal displacement sensor 12), the controller may open the isolation valve 32, the isolation valve 16, and the wheel cylinder liquid inlet valve 18 and/or the wheel cylinder liquid inlet valve 19. Then, the brake fluid may enter the brake wheel cylinder 26 from the primary brake cylinder 11 through the isolation valve 32, the isolation valve 16, and the wheel cylinder liquid inlet valve 18, to implement braking of a wheel corresponding to the brake wheel cylinder 26; and/or the brake fluid may enter the brake wheel cylinder 27 from the primary brake cylinder 11 through the isolation valve 32, the isolation valve 16, and the wheel cylinder liquid inlet valve 19, to implement braking of a wheel corresponding to the brake wheel cylinder 27.

When the controller receives a manual braking signal detected by the pedal displacement sensor 12 (for example, a signal generated when a driver steps on the pedal displacement sensor 12), the controller may alternatively open the isolation valve 33, the isolation valve 17, and the wheel cylinder liquid inlet valve 20 and/or the wheel cylinder liquid inlet valve 21. Then, the brake fluid may enter the brake wheel cylinder 28 from the primary brake cylinder 11 through the isolation valve 33, the isolation valve 17, and the wheel cylinder liquid inlet valve 20, to implement braking of a wheel corresponding to the brake wheel cylinder 28; and/or the brake fluid may enter the brake wheel cylinder 29 from the primary brake cylinder 11 through the isolation valve 33, the isolation valve 17, and the wheel cylinder liquid inlet valve 21, to implement braking of the wheels corresponding to the brake wheel cylinder 29.

A vehicle configured with the brake system provided in embodiments of this application may implement manual braking. In other words, the brake system provided in embodiments of this application may also implement manual braking of the vehicle.

### Mode 2 in which the primary brake module independently performs braking

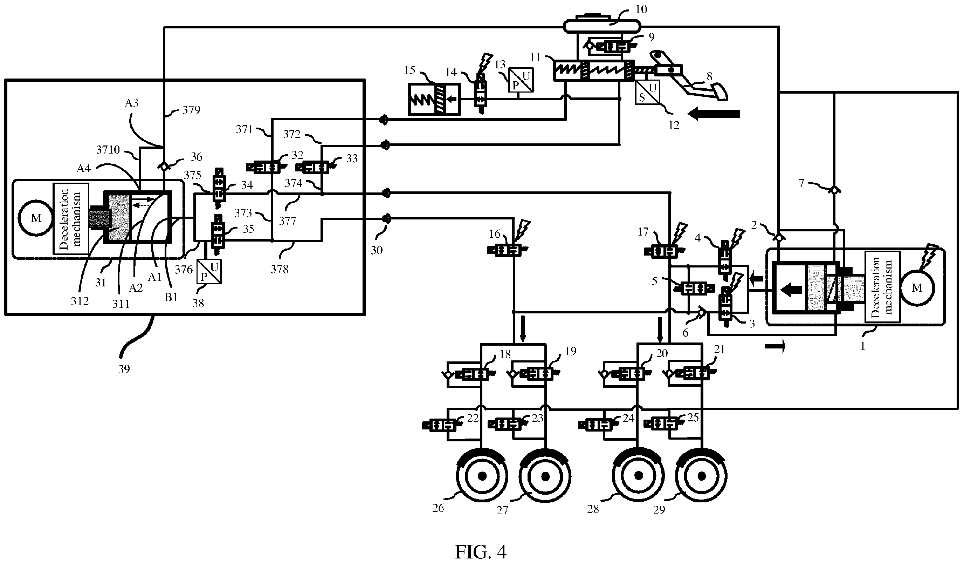

As shown in FIG. 4, the controller may close the isolation valve 16 and the isolation valve 17, open the regulating valve 3, the electromagnetic valve 4, the pressure equalizing valve 5, and open the wheel cylinder liquid inlet valve 18 (and/or the wheel cylinder liquid inlet valve 19, and/or the wheel cylinder liquid inlet valve 20, and/or the wheel cylinder liquid inlet valve 21). The controller may activate the main pressurizing apparatus 1. The main pressurizing apparatus 1 provides brake pressure, so that the brake fluid in the pump chamber of the main pressurizing apparatus 1 can enter the brake wheel cylinder 26 (and/or the brake wheel cylinder 27, and/or the brake wheel cylinder 28, and/or the brake wheel cylinder 29) through the regulating valve 3, the electromagnetic valve 4, the pressure equalizing valve 5, and the wheel cylinder liquid inlet valve 18 (and/or the wheel cylinder liquid inlet valve 19, and/or the wheel cylinder liquid inlet valve 20, and/or the wheel cylinder liquid inlet valve 21), to implement braking-by-wire of the vehicle.

### Mode 3 in which the primary brake module and the secondary brake module cooperate in braking

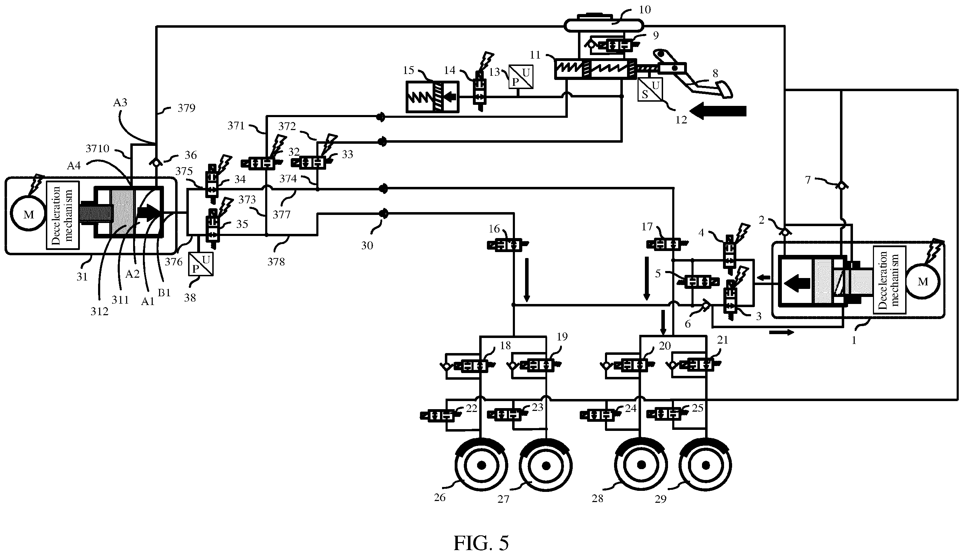

In some embodiments, the main pressurizing apparatus 1 may provide brake pressure to enable brake fluid to enter the brake wheel cylinder 26, the brake wheel cylinder 27, the brake wheel cylinder 28, and the brake wheel cylinder 29, to implement braking. As shown in FIG. 5, the main pressurizing apparatus 1 provides brake pressure to enable the brake fluid in the pump chamber of the main pressurizing apparatus 1 to pass through the regulating valve 3, the electromagnetic valve 4, and the pressure equalizing valve 5, so as to enter the brake wheel cylinder 26 through the wheel cylinder liquid inlet valve 18, enter the brake wheel cylinder 27 through the wheel cylinder liquid inlet valve 19, enter the brake wheel cylinder 28 through the wheel cylinder liquid inlet valve 20, and enter the brake wheel cylinder 25 through the wheel cylinder liquid inlet valve 21, so as to implement vehicle braking.

When hydraulic pressure in all or some of the brake wheel cylinder 26, the brake wheel cylinder 27, the brake wheel cylinder 28, and the brake wheel cylinder 29 is insufficient (for example, the hydraulic pressure detected by the sensor does not reach the target pressure), the controller may activate the electric linear pump 31 in the secondary brake module 39 to assist the primary brake module 40 in braking. The electric linear pump 31 may receive brake fluid from the liquid storage tank 10 in advance and store the brake fluid in the pump chamber 311 of the electric linear pump 31. For example, the controller may close the electromagnetic valve 34 and the electromagnetic valve 35, and control the piston 312 of the electric linear pump 31 to move back (that is, the piston 312 moves along the direction of the dashed arrow shown in FIG. 1), to reduce pressure in the pump chamber 311, so that the brake fluid in the liquid storage tank 10 can flow into the electric linear pump 31 through the pipe 379.

Next, the following describes an example of a working process of the secondary brake module.

In an illustrative example, when brake pressure in the brake wheel cylinder 26, the brake wheel cylinder 27, the brake wheel cylinder 28, the brake wheel cylinder 29 is insufficient, the controller opens the isolation valve 16 and the isolation valve 17, closes the isolation valve 32 and the isolation valve 33, opens the electromagnetic valve 34 and the electromagnetic valve 35, and activates the electric linear pump 31. Pushed by the piston 312 of the electric linear pump 31 (that is, the piston 312 moves along a direction of an arrow shown in FIG. 5), the brake fluid in the pump chamber 311 is squeezed out through the interface A1, so that the brake fluid enters the brake wheel cylinder 26, the brake wheel cylinder 27, the brake wheel cylinder 28, and the brake wheel cylinder 29, to increase the hydraulic pressure in the brake wheel cylinder 26, the brake wheel cylinder 27, the brake wheel cylinder 28, and the brake wheel cylinder 29.

In an illustrative example, when brake pressure in the brake wheel cylinder 26 and the brake wheel cylinder 27 is insufficient, the controller opens the isolation valve 16, closes the isolation valve 32 and the isolation valve 33, opens the electromagnetic valve 35, and activates the electric linear pump 31. The brake fluid enters, from the liquid storage tank 10, the pump chamber 311 of the electric linear pump 31 through the pipe 279 (and the pipe 3710). Pushed by the piston 312 of the electric linear pump 31, the brake fluid in the pump chamber 311 is squeezed out through the interface A1, so that the brake fluid enters the brake wheel cylinder 26 and the brake wheel cylinder 27, to increase the hydraulic pressure in the brake wheel cylinder 26 and the brake wheel cylinder 27.

When brake pressure in the brake wheel cylinder 26 and the brake wheel cylinder 29 is insufficient, the controller may open related valves corresponding to the brake wheel cylinder 26 and the brake wheel cylinder 29, and activate the electric linear pump 31, so that the brake fluid enters the brake wheel cylinder 26 and the brake wheel cylinder 29, to increase the hydraulic pressure. For details, refer to the foregoing descriptions. Details are not described herein again.

In some embodiments, the main pressurizing apparatus 1 may provide brake pressure to enable brake fluid to enter some of the brake wheel cylinder 26, the brake wheel cylinder 27, the brake wheel cylinder 28, and the brake wheel cylinder 29, to implement braking of some wheels. When hydraulic pressure in these brake wheel cylinders is insufficient, the controller may activate the electric linear pump 31 in the secondary brake module 39 to increase the hydraulic pressure in the brake wheel cylinders.

In an illustrative example, the controller may control the primary brake module 40 to brake the wheel corresponding to the brake wheel cylinder 26 and the wheel corresponding to the brake wheel cylinder 27. Specifically, the controller may close the wheel cylinder liquid inlet valve 20 and the wheel cylinder liquid inlet valve 21, open the wheel cylinder liquid inlet valve 18 and the wheel cylinder liquid inlet valve 19, and activate the main pressurizing apparatus 1, so that the brake fluid enters the brake wheel cylinder 26 and the brake wheel cylinder 27. When the hydraulic pressure in the brake wheel cylinder 26 and brake wheel cylinder 27 is insufficient, the controller may open the electromagnetic valve 35 and the isolation valve 16, and activate the electric linear pump 31. In this way, the electric linear pump 31 may provide brake pressure, so that the brake fluid in the pump chamber 311 of the electric linear pump 31 enters the brake wheel cylinder 26 and the brake wheel cylinder 27, to increase the hydraulic pressure in the brake wheel cylinder 26 and the brake wheel cylinder 27.

In an illustrative example, the controller may control the primary brake module 40 to brake the wheel corresponding to the brake wheel cylinder 26. Specifically, the controller may close the wheel cylinder liquid inlet valve 19, the wheel cylinder liquid inlet valve 20, and the wheel cylinder liquid inlet valve 21, open the wheel cylinder liquid inlet valve 18, and activate the main pressurizing apparatus 1, so that the brake fluid can enter the brake wheel cylinder 26. When the hydraulic pressure in the brake wheel cylinder 26 is insufficient, the controller may open the electromagnetic valve 35 and the isolation valve 16, and activate the electric linear pump 31. In this way, the electric linear pump 31 may provide brake pressure, so that the brake fluid in the pump chamber 311 of the electric linear pump 31 enters the brake wheel cylinder 26, to increase the hydraulic pressure in the brake wheel cylinder 26.

A vehicle configured with the brake system provided in embodiments of this application can implement dual cooperative braking of the primary brake module and the secondary brake module. Specifically, the brake system may simultaneously perform dual cooperative braking on wheels corresponding to the four brake wheel cylinders, or may perform dual cooperative braking on wheels corresponding to some of the four brake wheel cylinders, to meet functional requirements such as ABS, AEB, TCS, and ESP of the vehicle.

### Mode 4 in which the secondary brake module independently performs braking

When the primary brake module 40 fails (for example, the main pressurizing apparatus 1 fails), the secondary brake module 39 may independently brake the vehicle. The electric linear pump 31 may receive brake fluid from the liquid storage tank 10 in advance and store the brake fluid in the pump chamber 311 of the electric linear pump 31. For example, the controller may close the electromagnetic valve 34 and the electromagnetic valve 35, and control the piston 312 of the electric linear pump 31 to move back, to reduce pressure in the pump chamber 311, so that the brake fluid in the liquid storage tank 10 flows into the electric linear pump through the pipe 379.

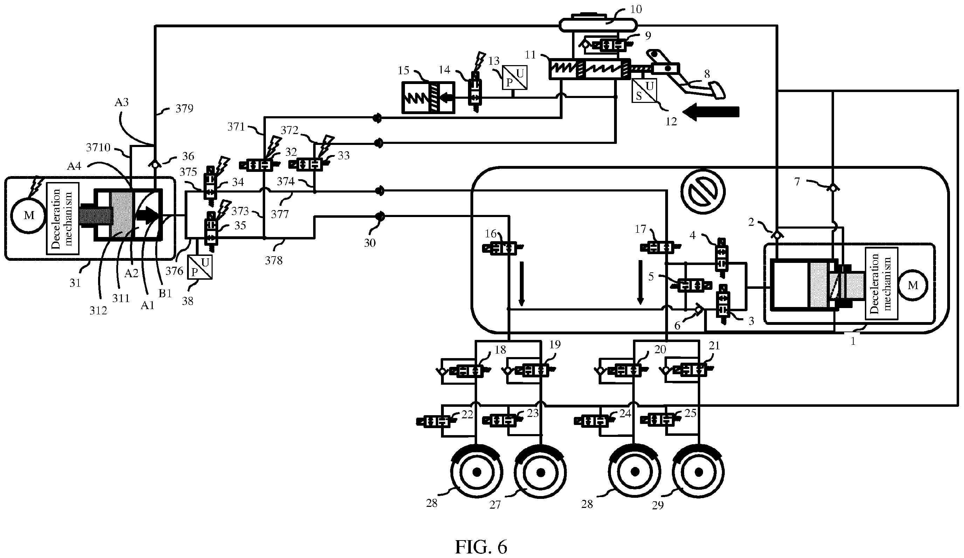

In some embodiments, as shown in FIG. 6, the secondary brake module 39 may independently brake wheels corresponding to the four brake wheel cylinders. Specifically, the controller may open the isolation valve 16, the isolation valve 17, the electromagnetic valve 34, and the electromagnetic valve 35, and activate the electric linear pump 31. The brake fluid enters, from the liquid storage tank 10, the pump chamber 311 of the electric linear pump 31 through the pipe 379 (and the pipe 3710). Pushed by the piston 312 of the electric linear pump 31, the brake fluid in the pump chamber 311 is squeezed out through the interface A1, so that the brake fluid enters the brake wheel cylinder 26, the brake wheel cylinder 27, the brake wheel cylinder 28, and the brake wheel cylinder 29, to implement independent braking-by-wire of the vehicle by the secondary brake module 39.

The secondary brake module 39 has a dual-circuit independent pressurization characteristic. When the primary brake module 40 fails and a brake circuit on a brake wheel cylinder side fails, the secondary brake module 39 may independently brake a wheel of a non-failed brake circuit, to further ensure driving safety of the vehicle.

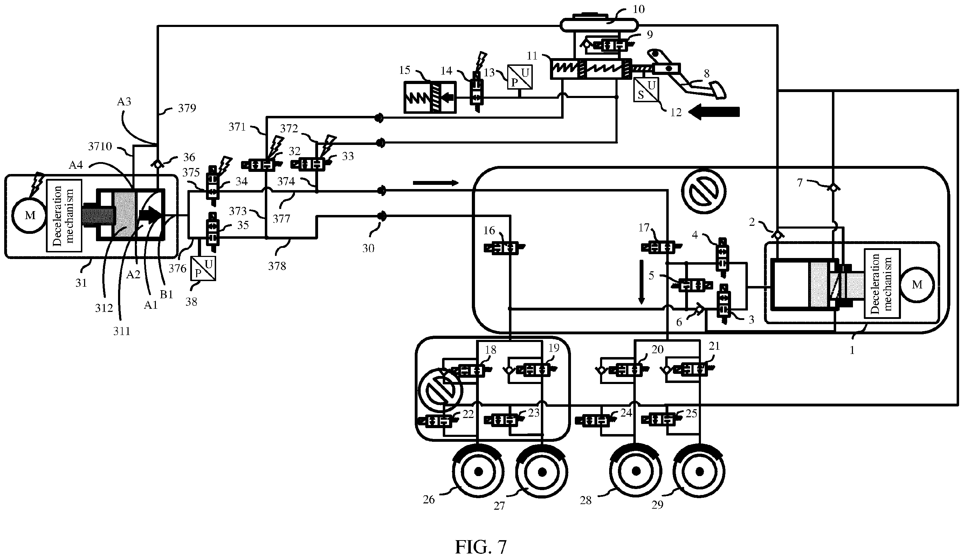

In some embodiments, as shown in FIG. 7, brake circuits on which the brake wheel cylinder 26 and the brake wheel cylinder 27 are located may be set to fail. The secondary brake module 39 may brake wheels of non-failed brake circuits (brake circuits on which the brake wheel cylinder 28 and the brake wheel cylinder 29 are located). Specifically, the controller may close the electromagnetic valve 35 and the isolation valve 16, open the electromagnetic valve 34 and the isolation valve 17, and activate the electric linear pump 31, so that the brake fluid can enter the brake wheel cylinder 28 and the brake wheel cylinder 29, to implement braking of corresponding wheels.

In this embodiment of this application, the electric linear pump 31 provides brake pressure for the secondary brake module 39, so that the secondary brake module 39 can provide long-time and high-precision brake pressure, thereby performing long-time and high-precision braking on the vehicle. In addition, the secondary brake module 39 has a dual-circuit structure, and can independently brake each wheel of the vehicle, so that the functional requirements such as ABS, AEB, TCS, ESP and the like can be met.

In some embodiments, in a comparative experiment, the applicant compares a time required for the brake system provided in embodiments of this application to reach target brake pressure with a time required for a brake system that uses a plunger pump to provide redundant brake pressure to reach the same target brake pressure. For ease of description, the brake system provided in embodiments of this application may be referred to as a brake system D 1 for short, and the brake system that uses a plunger pump to provide redundant brake pressure may be referred to as a brake system D2 for short.

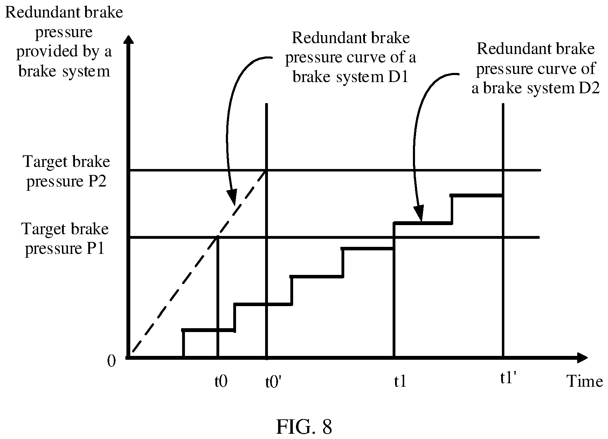

In the comparative experiment, a primary brake module of the brake system D1 and a primary brake module of the brake system D2 may be manually disabled. Then, after the target brake pressure is set and the brake system D1 and the brake system D2 are activated, redundant brake pressure provided by the brake system D1 and redundant brake pressure provided by the brake system D2 are measured in real time, and redundant brake pressure curves are drawn based on measurement results. The results are shown in FIG. 8.

It can be learned from FIG. 8 that the redundant brake pressure provided by the brake system D1 can reach the target brake pressure P 1 in a shorter time than the brake system D2. In addition, the redundant brake pressure provided by the brake system D1 can be continuously increased to reach the target brake pressure. Compared with the brake system D2 that increases the redundant brake pressure in a stepped manner, the brake system D1 controls the redundant brake pressure more accurately.

In addition, the brake system D1 may provide greater redundant brake pressure than the brake system D2. When the target brake pressure is large (for example, target brake pressure P2 shown in FIG. 8), the redundant brake pressure provided by the brake system D2 cannot reach the target brake pressure, but the redundant brake pressure provided by the brake system D1 can quickly reach the target brake pressure.

It can be learned from the foregoing descriptions of the structure and the working principle of the brake system provided in embodiments of this application and the comparative experiment result that the brake system provided in embodiments of this application has at least the following advantages:
(1) two pressurizing modules (the secondary brake module 39 and primary brake module 40) work coordinately, so that the brake system has a high-rate brake mode, and is more suitable for requirements of autonomous vehicles of L4 level (high driving automation, usually without manual intervention, except in special cases) and above;
(2) the secondary brake module 39 has fewer electromagnetic valves and a primary electric cylinder with more stable and fast pressurization characteristics, and has more excellent comprehensive brake performance compared with a conventional redundant brake module;
(4) the secondary brake module 39 may also realize dual-circuit redundant brake, thereby improving safety of the system;
(5) the secondary brake module 39 is a full-function backup of the primary brake module, thereby further improving the safety of the brake system;
(6) the secondary brake module 39 may implement a brake-by-wire function, and meet requirements of integrated brake functions such as ABS/AEB/TCS/ESP of the vehicle; and
(7) redundant braking responds quickly and the control is accurate.

It should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A brake system for vehicle braking, comprising:
at least one brake wheel cylinder;
a primary brake module (40), configured to provide brake pressure to brake a vehicle; and
a secondary brake module (39), comprising a first electric linear pump (31), a first pipe, and a second pipe, wherein the first electric linear pump (31) comprises a piston (312) and a pump chamber (311), wherein
the pump chamber (311) is connected to a liquid storage tank (10) through the second pipe; when the piston (312) moves away from a first interface, the pump chamber (311) receives brake fluid from the liquid storage tank (10) through the second pipe; and the first interface is an interface between the pump chamber (311) and the first pipe; and
the pump chamber (311) is connected to the at least one brake wheel cylinder through the first pipe; and the piston (312) moves toward the first interface and enables the brake fluid in the pump chamber (311) to enter the first pipe to provide brake pressure.

2. The brake system according to claim 1, wherein the secondary brake module (39) further comprises a first electromagnetic valve disposed on the first pipe;
when the piston (312) moves toward the first interface, the first electromagnetic valve is in an open state, to transmit brake pressure to the at least one brake wheel cylinder; and
when the piston (312) moves away from the first interface, the first electromagnetic valve is in a closed state, to prevent backflow of the brake fluid from the at least one brake wheel cylinder to the pump chamber (311).

3. The brake system according to claim 2, wherein the at least one brake wheel cylinder comprises at least two brake wheel cylinders; the first pipe comprises two branches; the two branches are separately connected to different brake wheel cylinders of the at least two brake wheel cylinders; and the first electromagnetic valve comprises two electromagnetic valves, and the two electromagnetic valves are separately disposed on different branches of the two branches.

4. The brake system according to claim 2, wherein the brake system further comprises a controller; the secondary brake module (39) further comprises a pressure sensor disposed on the first pipe; and the pressure sensor is located between the first electromagnetic valve and the first interface; and
when the first electromagnetic valve is in the open state, the pressure sensor is configured to detect pressure in the first pipe, and the controller is configured to calculate hydraulic pressure in the at least one brake wheel cylinder based on the pressure detected by the pressure sensor.

5. The brake system according to claim 1, wherein the secondary brake module (39) further comprises a third pipe, one end of the third pipe is connected to the first pipe, the other end of the third pipe is connected to a primary brake cylinder (11), and a second electromagnetic valve is disposed on the third pipe;
when braking is performed manually, the second electromagnetic valve is in an open state, to enable brake fluid in the primary brake cylinder (11) to enter the first pipe through the third pipe, to provide brake pressure; the brake fluid in the primary brake cylinder (11) is received from the liquid storage tank (10) through a pipe; and
when the secondary brake module (39) provides brake pressure, the second electromagnetic valve is in a closed state, to prevent the brake pressure in the first pipe from being transmitted to the primary brake cylinder (11).

6. The brake system according to claim 1, wherein the primary brake module (40) comprises a second electric linear pump (1), a fourth pipe on which a third electromagnetic valve is disposed, and a fifth pipe on which a fourth electromagnetic valve is disposed;
the second electric linear pump (1) is configured to provide brake pressure;
one end of the fourth pipe is connected to the first pipe, and the other end of the fourth pipe is connected to the at least one brake wheel cylinder; and
one end of the fifth pipe is connected to the fourth pipe, and the other end of the fifth pipe is connected to the second electric linear pump (1) of the primary brake module; and a position at which the fifth pipe and the fourth pipe are connected is located between the third electromagnetic valve and the at least one brake wheel cylinder.

7. The brake system according to claim 6, wherein when the brake system is in a mode in which the primary brake module independently performs braking, the third electromagnetic valve is in a closed state, to prevent the brake pressure provided by the second electric linear pump (1) from being transmitted to the secondary brake module (39); and the fourth electromagnetic valve is in an open state, to enable the brake pressure provided by the second electric linear pump to be transmitted to the at least one brake wheel cylinder.

8. The brake system according to claim 6, wherein when the brake system is in a mode in which the secondary brake module independently performs braking, the third electromagnetic valve is in an open state, to enable the brake pressure provided by the secondary brake module (39) to be transmitted to the at least one brake wheel cylinder; and the fourth electromagnetic valve is in a closed state, to prevent the brake pressure provided by the secondary brake module (39) from being transmitted to the second electric linear pump (1).

9. The brake system according to claim 6, wherein when the brake system is in a mode in which the primary brake module and the secondary brake module cooperate in braking, the third electromagnetic valve and the fourth electromagnetic valve each are in an open state, to enable the brake pressure provided by the secondary brake module (39) and the brake pressure provided by the second electric linear pump (1) to be transmitted to the at least one brake wheel cylinder.

10. The brake system of claim 1, wherein the first pipe is divided into at least one branch at the at least one brake wheel cylinder; the at least one branch is in a one-to-one correspondence with the at least one brake wheel cylinder; and an isolation valve is disposed on each of the at least one branch, to independently brake each of the at least one brake wheel cylinder.

11. The brake system according to claim 1, wherein that the piston (312) moves toward the first interface and enables brake fluid in the pump chamber (311) to enter the first pipe is as follows:
when the primary brake module (40) fails or the provided brake pressure is insufficient, the piston (312) moves toward the first interface and enables the brake fluid in the pump chamber (311) to enter the first pipe.

12. An autonomous vehicle, comprising the brake system according to any one of claims 1 to 11.
